# EUROPÄISCHE PATENTSCHRIFT

(11) **EP 2 045 227 B1**
(45) Veröffentlichungstag und Bekanntmachung des Hinweises auf die Patenterteilung: **27.08.2014**
(21) Anmeldenummer: 07018710.9
(22) Anmeldetag: 24.09.2007
(51) Int. Cl.: C04B 38/02, C04B 28/06, C04B 28/14, C04B 111/28, C04B 111/52

(54) **Anorganische Schäume auf Basis von Schnellzement als Brandschutzmasse zum Füllen von Hohlkörpern**
Inorganic foams based on rapid setting cement as a fire protection mass for filling cavities
Mousses inorganiques à base de ciment rapide en tant que masse pare-feu pour le remplissage de corps creux

(43) Veröffentlichungstag der Anmeldung: 08.04.2009
(73) Patentinhaber: Promat GmbH, 4021 Linz (AT)
(72) Erfinder: Blum, Karin, 4643 Pettenbach (AT); Lüdecke, Bernhard, 4060 Leonding (AT)
(74) Vertreter: Ring & Weisbrodt

(56) Entgegenhaltungen:
- EP-A1- 0 628 523
- WO-A-2006/069411
- WO-A2-2004/014816
- CN-A- 101 386 509
- US-A- 2 371 928
- US-A- 4 040 850
- TOKUMOTO, TERAO, SASAKI: "HIGH-STRENGTH AREATED CONCRETE" 9. Februar 1976 (1976-02-09), CHEMICAL ABSTRACTS + INDEXES, AMERICAN CHEMICAL SOCIETY. COLUMBUS, US , COLUMBUS, OH, US 84 , XP000183253 ISSN: 0009-2258 * Zusammenfassung *

## Beschreibung

Die vorliegende Erfindung betrifft Brandschutz-Ortschäume, eine hydraulisch abbindende Zusammensetzung zur Herstellung von diesen sowie ferner Brandschutzeinrichtungen, die solche Schäume enthalten.

In Europa müssen Brandschutzsysteme den Brandschutzanforderungen der DIN/EN genügen, welche im Wesentlichen eine Temperaturweiterleitung von Feuerseite nach Luftseite um max. 180 K bzw. °C an definierten Stellen erlaubt. Zusätzlich muss gewährleistet werden, dass Feuer und Rauchgase nicht durchtreten können.

Durch Brandversuche hat man ermittelt, welche Temperaturen bei einem Schadensfeuer nach welcher Zeit auftreten und in der so genannten Einheitstemperaturkurve (ETK) definiert, welche mittlerweile weltweit Anerkennung (ISO R 834) genießt. Dabei wird der Prüfkörper in der Prüfbrennkammer dem folgenden Zeit/ Temperaturprogramm unterzogen:

| Zeit/ min | Temperatur/ °C |
|---|---|
| 30 | 822 |
| 60 | 925 |
| 90 | 986 |
| 120 | 1029 |
| 180 | 1090 |

In der Tabelle ist z.B. zu erkennen, dass nach einem 30-minütigen Schadensfeuer bereits eine Temperatur von über 800 °C erreicht wird. In Deutschland wurde die ETK in die DIN 4102 Teil 2 aufgenommen. Hier regelt sie die Einteilung der Baustoffe (z.B. Stahl, Holz, Beton), Bauteile (z. B. Wände, Decken) und Sonderbauteile (z.B. Installationskanäle) in verschiedene Brandklassen.

Bei der Messung wird die Zeit ermittelt, die Bauteile dem Feuer standhalten, ohne ihre Funktion als trennendes, isolierendes und gegebenenfalls tragendes Bauteil zu verlieren.

Die Bauteile (Bauprodukte) werden entsprechend der Feuerwiderstandsdauer in die Feuerwiderstandsklassen 30, 60, 90, 120 und 180 eingestuft.

Man unterscheidet dabei die Bauteile auch zwischen:
- feuerhemmend (mindestens 30, bzw. 60 Minuten Widerstand)
- feuerbeständig (mindestens 90, bzw. 120 Minuten Widerstand) und
- hochfeuerbeständig (mindestens 180 Minuten Widerstand)

In den USA müssen Brandschutzsysteme den Brandschutzanforderungen der UL nach u.a. ASTM-Normen genügen. Im Gegensatz zu Europa findet in USA eine Unterteilung der Prüfung in ein F-Rating und ein T-Rating statt. Das F-Rating legt keinen Wert auf Temperaturen, sondern definiert mit Hilfe eines sog. Wasserstrahltests die Stabilität des Brandschutzsystems nach einem Brand. Das T-Rating berücksichtigt zusätzlich eine Temperaturweiterleitung ähnlich dem europäischen System. Zusätzlich muss gewährleistet werden, dass Feuer und Rauchgase nicht durchtreten können.

Die Fähigkeit, auf einer möglichst geringen Strecke, einen möglichst hohen Temperaturgradienten aufrechterhalten zu können ist von entscheidender Bedeutung für den Feuerschutz von und in Gebäuden. Da vor allem größere Gebäude statisch durch die Verwendung von Stahlkonstruktionen gestützt werden, ist der möglichst lange Schutz dieser Stahlkonstruktion vor hohen Temperaturen im Brandfall von äußerster Wichtigkeit für die Gebäudestabilität. Da vor allem kaltverformte Baustähle bereits bei Temperaturen oberhalb von 400 °C beginnen an Festigkeit zu verlieren und damit das Gebäude droht einzustürzen, wurden vielerlei Anstrengungen unternommen, geeignete Schutzmaßnahmen für solche Bauelemente zu entwickeln. Dasselbe gilt für die feuerbeständige Ausrüstung von Brandschutztüren, an die die weitere Anforderung gestellt wird, dass diese Ausrüstung kein zu hohes spezifisches Gewicht haben darf, da die Tür beweglich sein soll.

Aus dem Stand der Technik sind für solche Zwecke verschiedene Brandschutzschäume oder Brandschutzplatten bekannt.

So beschreibt die DE 100 07 980 A1 einen Zweikomponenten-Ortschaum auf Basis einer Polyol- und einer Polyisocyanatkomponente wobei ein Polyurethanschaum mit einer Dichte von weniger als 200 kg/m³ erhalten wird. Dieser 2-K Schaum wird zum Ausschäumen von Hohlräumen in Gebäuden zum Zwecke des Brandschutzes eingesetzt. Nachteilig bei diesem Brandschutzschaum ist, dass die Brandschutzeigenschaften bei hohen Temperaturen oder bei längerer Brandbelastung nicht ausreichend sind. Außerdem können die Ausgangssubstanzen gesundheitlich bedenkliche Bestandteile in Form von Diisocyanatverbindungen enthalten und im Brandfall giftige Rauchgase freisetzen.

Die EP 0 866 039 A1 beschreibt einen anorganischen Isolierschaum auf Basis von Flugasche und einem sauer reagierenden Bindemittel. Nachteilig hierbei ist, dass Flugasche ein stark inhomogener Ausgangsstoff ist, der die Einhaltung einer gleich bleibenden Produktqualität erschwert und ferner die Tatsache, dass sauer reagierende Bindemittel bei einigen Anwendungsgebieten aufgrund möglicher korrosiver Wirkung auf Metalle, so zum Beispiel auf Kupferrohrleitungen, nicht sinnvoll eingesetzt werden können.

Aus der US 4,040,850 ist eine Zusammensetzung zur Herstellung von Brandschutzschäumen bekannt, welche Gips als Bindemittel, eine Aufschäumungskomponente aus Wasserstoffperoxid und einem Zerfallskatalysator sowie eine wasserlöslichen Aluminiumverbindung enthält. Des Weiteren werden poröse Formkörper beschrieben, die aus den zuvor genannten Zusammensetzungen durch Anmachen mit Wasser und anschließendem Abbinden erhalten werden.

Aus WO 2004/014816 A2 ist die Verwendung einer hydraulisch abbindenden Zusammensetzung zur Herstellung von anorganischen Brandschutzschäumen bekannt. Die Zusammensetzung enthält Calciumaluminatzement sowie einen Schaumstabilisator, beispielsweise in Form von Proteinen. Die Zusammensetzung wird mit Wasser zu einer Slurry vermischt und unter Lufteintrag schaumig aufgeschlagen.

Ferner sind auch vorgefertigte mineralische Platten zum Brandschutz kommerziell erhältlich, wie beispielsweise von der Promat GmbH. Es handelt sich dabei um Brandschutzplatten, welche aus mineralischen Baustoffen hergestellt werden. Eingesetzt werden diese zur Beplankung von Ständerwänden, Umhausungen sowie Auskleidungen, Errichtung von Luft-und Installationskanälen sowie Unterdecken. Nachteilig sind deren hohes spezifisches Gewicht, ferner die Tatsache, dass diese Platten nur mit speziellem Werkzeug schneidbar sind und nicht mehr nachträglich an schwer zugänglichen Stellen eingesetzt werden können. Bei Einsatz in Türfüllungen und Profilen können bedingt durch den Zuschnitt die Randzonen nur unzureichend gefüllt sein.

Ausgehend von diesem Stand der Technik besteht die Aufgabe der vorliegenden Erfindung darin, eine Zusammensetzung für den Brandschutz bereit zu stellen, die sich leicht herstellen und verarbeiten lässt und dabei gleichzeitig eine möglichst vollständige Hohlraumfüllung ermöglicht. Schließlich soll die neue Zusammensetzung ein geringes spezifisches Gewicht aufweisen und dabei gleichzeitig hervorragende Brandschutzeigenschaften aufweisen, insbesondere im Hinblick auf thermische Stabilität und Isolationseigenschaften.

Überraschenderweise wurde gefunden, dass eine Zusammensetzung basierend auf einem hydraulischen Bindemittel, einem Aufschäummittel und einem Schaumstabilisator beim Abbindevorgang mit Wasser einen anorganischen Brandschutzschaum liefert, der sich hervorragend in die mit diesem Brandschutzschaum auszufüllenden Hohlkörper verfüllen lässt und diesen damit nach dem vollständigen Abbinden sehr gute Isolier- und insbesondere Brandschutzeigenschaften verleiht.

Gegenstand der vorliegenden Erfindung ist daher die Verwendung einer hydraulisch abbindenden Zusammensetzung zur Herstellung von anorganischen Brandschutzschäumen, wobei die Zusammensetzung bezogen auf die Trockenmischung 30 bis 95 Gew.-% wenigstens eines hydraulischen Bindemittels, eine Schäumungskomponente sowie einen Schaumstabilisator aufweist, wobei die Verwendung dadurch gekennzeichnet ist, dass das hydraulische Bindemittel ein pH-neutrales oder alkalisches Bindemittel ist, welches Schnellzement enthält und dass als Schäumungskomponente Wasserstoffperoxid und Braunstein eingesetzt werden.

Die erfindungsgemäße Zusammensetzung wird bei der Anwendung mit einer für den Abbindevorgang notwendigen Menge Wasser versetzt und sorgfältig gemischt, wobei die Brandschutzmasse entsteht. Diese kann dann in Formen gegossen werden oder in die mit einem Brandschutz auszurüstenden Hohlräume oder Kavitäten gefüllt werden. Der besondere Vorteil der erfindungsgemäßen Zusammensetzung ist, dass das Ausschäumen zu Brandschutzzwecken direkt auf der Baustelle vorgenommen werden kann.

Durch die Schäumungskomponente entsteht aus der Brandschutzmasse ein Brandschutzschaum, der durch das in der Zusammensetzung enthaltene hydraulische Bindemittel unter leichter Selbsterwärmung aushärtet und einen festen Brandschutzschaum liefert. Die Vorteile dieses Schaums sind zum einen dessen niedriges spezifisches Gewicht, wodurch er sich zum Beispiel auch zum Verfüllen von beweglichen Teilen wie Brandschutztüren eignet, zum anderen weist der erfindungsgemäße Schaum hervorragende Brandschutzeigenschaften auf.

Ein weiterer Vorteil des erfindungsgemäßen Brandschutzschaums ist, dass beim Befüllen von Kavitäten bzw. Hohlräumen mit der noch nicht ausgeschäumten Brandschutzmasse, diese sich durch den Ausschäumvorgang auch in schwer zugängliche Stellen hineinpresst, wodurch eine nahezu vollständige Füllung insbesondere auch unregelmäßig geformter Hohlräume erreicht wird. Da eine vollständige Füllung beispielsweise einer Brandschutztür entscheidend für deren Brandschutzeigenschaften ist, ist mit Hilfe der erfindungsgemäßen Zusammensetzung die Herstellung besonders effektiver Brandschutzeinrichtungen möglich.

Die hydraulischen Bindemittel weisen erfindungsgemäß einen nahezu neutralen bis alkalischen pH-Wert in Wasser auf. Als hydraulisches Bindemittel wird eine mineralische Zusammensetzung verstanden, die bei Kontakt mit Wasser irreversibel steinartig aushärtet und welche Schnellzement enthält, da bei dieser der Abbindevorgang so schnell verläuft, dass der durch die Aufschäumkomponente gebildete Schaum nicht bereits beginnt in sich zusammen zu fallen, bevor er durch das Bindemittel genügend Eigenstabilität erreicht hat. Ein vollständiges Abbinden ist hierfür nicht erforderlich, es reicht bereits ein Abbindestadium aus, bei dem sich der Schaum selbst tragen kann. Hierbei sind Abbindegeschwindigkeiten von Vorteil, bei denen der Schaum eine Eigenstabilität nach spätestens 60 Minuten erreicht, bevorzugt nach spätestens 40 Minuten, besonders bevorzugt nach spätestens 30 Minuten, ganz besonders bevorzugt nach spätestens 20 Minuten.

Vorteilhaft bei diesen erfindungsgemäß eingesetzten Bindemittelsystemen ist, dass diese unter Umgebungstemperaturen abbinden und kein Brennvorgang wie bei keramischen Systemen erforderlich ist. Ferner wirkt der neutrale bzw. alkalische pH-Wert der Bindemittelmatrix nicht korrosiv oder sogar korrosionsinhibierend bei Kontakt mit Metallen. So wird Stahlblech oder auch verzinkter Stahl nicht angegriffen, ebenso wenig wird Kupfer, wie es in Leitungssystemen verwendet wird, durch derartige Bindemittel angegriffen. Dies ist insbesondere dann von Vorteil, wenn die erfindungsgemäße Zusammensetzung zum Ausschäumen von Durchbrüchen o.ä. eingesetzt wird, durch die Leitungssysteme geführt sind.

Die erfindungsgemäße Zusammensetzung enthält dabei zwischen 30 und 95 Gew.-% Bindemittel, bevorzugt zwischen 50 und 95 Gew.-%, besonders bevorzugt zwischen 60 und 90 Gew.-% bezogen auf die Trockenmischung.

Es ist erfindungsgemäß vorgesehen, dass die Zusammensetzung während des Abbindevorgangs durch Freisetzung eines Treibgases aufschäumt. Als Treibgase kommen beispielsweise Wasserstoff, Sauerstoff, Stickstoff oder Kohlendioxid in Frage.

Das Treibgas wird durch die Schäumungskomponente geliefert, wobei die Freisetzung der Treibgase in der Regel auf chemischem Wege erfolgt. Die Schäumungskomponente besteht aus zwei Bestandteilen die erst beim Vermischen miteinander zur Reaktion gebracht werden. Bevorzugt ist für diese Reaktion die Anwesenheit von Wasser erforderlich. Dies ist besonders vorteilhaft, weil auf diesem Wege die Lagerstabilität der erfindungsgemäßen Zusammensetzung erhöht werden kann, da es bei Abwesenheit von Wasser nicht zum unerwünschten Abbau der Schäumungskomponente kommt und erst durch Zusetzen von Anmachwasser im Anwendungsfall der Ausschäumvorgang beginnt.

Als erfindungsgemäße Schäumungskomponente wird die Kombination eines Sauerstoffträgers und eines Katalysators zur Freisetzung des Sauerstoffs verwendet. Als Sauerstoffträger wird im Sinne der Erfindung Wasserstoffperoxid, verwendet.

Als Katalysatoren dient Braunstein. Entscheidend ist, dass der eingesetzte Katalysator verschiedene Oxidationsstufen annehmen kann, deren Redoxpotentiale so nahe beieinander liegen, dass bei der Umsetzung mit Wasserstoffperoxid sowohl eine Oxidation als auch eine Reduktion auftreten kann und sich der Katalysator somit nicht verbraucht. Dies wird anhand der folgenden schematischen Reaktionsgleichungen mit M als Übergangsmetall verdeutlicht:

2 M^{II}O + 2 H₂O₂ → M^{III}₂O₃ + 2 H₂O + ½ O₂

M^{III}₂O₃ + H₂O₂ → 2 M^{II}O + H₂O + O₂

Der Vorteil von Schäumungskomponenten auf Basis eines Sauerstoffträgers und eines Katalysators liegt darin, dass sich über die eingesetzte Katalysatormenge die Zersetzungsgeschwindigkeit des Sauerstoffträgers und damit die Schaumbildungsgeschwindigkeit steuern lässt. Andererseits kann die Schaumhöhe bzw. das Porenvolumen des Schaums über die eingesetzte Menge an Sauerstoffträger gesteuert werden. So führen höhere Katalysatormengen zu spontanerer Sauerstofffreisetzung und höhere Sauerstoffträgermengen zu einem erhöhten Porenvolumen und damit einem geringeren spezifischen Gewicht der ausgeschäumten Brandschutzmasse.

Erfindungsgemäße, Sauerstoff freisetzende Schäumungskomponenten enthalten bezogen auf die erfindungsgemäße Zusammensetzung im trocknen Zustand einen Katalysator in einer Menge von etwa 0,01 bis 5 Gew.-%, bevorzugt 0,05 bis 3 Gew.-%, besonders bevorzugt von etwa 0,1 bis 2 Gew.-% sowie einen Sauerstoffträger in einer Menge von etwa 0,1 bis 10 Gew.-%, bevorzugt 0,2 bis 7 Gew.-%, besonders bevorzugt von etwa 1,0 bis 6 Gew.-%. Die erfindungsgemäße Zusammensetzung enthält ferner einen Schaumstabilisator. Dieser bewirkt einerseits, dass die durch die Schäumungskomponente freigesetzten Gase in der Brandschutzmasse möglichst fein verteilte Gasblasen bilden und damit einen feinporigen Schaum liefern welcher gute Brandschutzeigenschaften aufweist und andererseits, dass dieser Schaum für so lange stabilisiert wird, bis das Bindemittel dem Schaum eine ausreichende Stabilität verleiht, die ein Zusammenfallen des Schaums verhindert. Außerdem lässt sich auch die Porengröße des Schaums über den Schaumstabilisator beeinflussen. Dabei spielt die Art des Stabilisators, dessen eingesetzte Menge und das verwendete Bindemittel eine Rolle. Die gewünschte Porengröße und Struktur lässt sich dabei durch wenige Versuche ermitteln und damit an den Anwendungszweck anpassen.

Erfindungsgemäß können als Schaumstabilisatoren Tenside, Bentonit, Stärke sowie Stärkederivate, Gelatine, Cellulose sowie Cellulosederivate oder Polymere sowie Polymerdispersionen eingesetzt werden. Erfindungsgemäße Zusammensetzungen enthalten bezogen auf die Trockenstoffe Schaumstabilisatoren in einer Menge von etwa 0,001 bis 5 Gew.-%, bevorzugt 0,01 bis 3 Gew.-%, besonders bevorzugt von etwa 0,1 bis 2 Gew.-%.

Das hydraulische Bindemittel ist Schnellzement auf Portlandzementbasis, da sie eine ausreichende Abbindegeschwindigkeit aufweisen, die dazu führt, dass die ausgeschäumte Brandschutzmasse eine ausreichende Eigenstabilität durch das Bindemittel erreicht, bevor der Schaum beginnt, in sich zusammen zu fallen.

Es werden als Schäumungskomponente Wasserstoffperoxid und Braunstein verwendet, da über die Braunsteinmenge die Zersetzungsgeschwindigkeit und über die Wasserstoffperoxidmenge die Schaumhöhe bzw. das Schaumvolumen eingestellt werden kann.

Nach einer weiteren, besonders bevorzugten Ausführungsform der erfindungsgemäßen Zusammensetzung erfüllt der aus dieser Zusammensetzung nach Mischen mit Wasser und Abbinden erhaltene Brandschutzschaum nach dem Abbinden die Brandschutzvorschriften gemäß DIN 4102 in der Art, dass eine aus dem Brandschutzschaum hergestellte Platte von 50 mm Dicke bei einer Brandschutzprüfung nach der Einheitstemperaturkurve (ETK) nach DIN 4102 das Abbruchkriterium einer Temperaturerhöhung von 180°C auf der Kaltseite frühestens nach einer Prüfdauer von 120 Minuten erreicht. Besonders bevorzugt wird das Abbruchkriterium einer Temperaturerhöhung von 180°C auf der Kaltseite frühestens nach einer Prüfdauer von 180 Minuten erreicht, ganz besonders bevorzugt erst nach einer Prüfdauer von mehr als 200 Minuten. Damit ist es möglich, Bauteile mit Hilfe der erfindungsgemäßen Zusammensetzungen bzw. der daraus hergestellten Brandschutzschäume derart auszurüsten, dass bei verhältnismäßig geringen Dicken die Bauteile als feuerbeständig oder sogar hochfeuerbeständig im Sinne der DIN 4102 bezeichnet werden können. Erreicht wird diese Feuerbeständigkeit vor allem durch die eingesetzten Bindemittel, sowie die spezielle Schaumstruktur, die durch das Zusammenspiel zwischen Schäumungskomponente und Schaumstabilisator erhalten wird.

Weiterhin kann es vorgesehen sein, dass die erfindungsgemäße Zusammensetzung außerdem weitere Inhaltsstoffe und/oder Additive enthält, um die Anwendungseigenschaften der erfindungsgemäßen Zusammensetzung zu optimieren. Solche Inhaltsstoffe bzw. Additive können beispielsweise ausgewählt aus der Gruppe von Verflüssigern, Verzögerern, Stabilisierungsmitteln, Entschäumern, Beschleunigern, Korrosionsinhibitoren, Füllstoffen und dergleichen. Dabei kann dasselbe Additiv auch mehreren dieser vorbezeichneten Gruppen angehören.

Beispielsweise kann die erfindungsgemäße Zusammensetzung mindestens einen Verflüssiger enthalten, insbesondere in Mengen von 0,01 bis 5 Gew.-%, vorzugsweise 0,05 bis 2 Gew.-%, besonders bevorzugt 0,1 bis 0,5 Gew.-%, bezogen auf die Zusammensetzung. Beispiele für erfindungsgemäß bevorzugte Verflüssiger sind Verflüssiger auf der Basis modifizierter Polycarboxylat-ether. Insbesondere werden die Verflüssiger derart ausgewählt, dass sie den Wasserbedarf beim Anmachen reduzieren und zudem vorteilhafterweise auch zu einer besonders guten Frühfestigkeitsentwicklung führen bzw. diese fördern.

Weiterhin kann die erfindungsgemäße Zusammensetzung zur Optimierung der Anwendungseigenschaften ein die rheologischen und/oder physikalischen Eigenschaften verbesserndes bzw. beeinflussendes Additiv enthalten. Dieses kann beispielsweise auf Basis eines in Wasser redispergierbaren Polymerbindemittels, vorzugsweise auf Basis von Vinylacetat und Ethylen ausgebildet sein (Ethylen/Vinylacetat-Copolymer). Ein derartiges Additiv kann insbesondere in Mengen von 1 bis 15 Gew.-%, vorzugsweise 2 bis 10 Gew.-%, bezogen auf die Zusammensetzung, eingesetzt werden.

Nach einer besonders bevorzugten Ausführungsform der erfindungsgemäßen Zusammensetzung enthält diese Abbindeverzögerer und/ oder Abbindebeschleuniger. Als Abbindebeschleuniger kommen beispielsweise Verbindungen wie Alkali- oder Erdalkalicarbonaten, besonders bevorzugt Lithiumcarbonat zum Einsatz. Dies ist besonders vorteilhaft, da durch die Abbindegeschwindigkeit des Bindemittels gesteuert werden kann. Durch diese Substanzen kann die Abbindegeschwindigkeit so eingestellt werden, dass einerseits eine ausreichend lange Verarbeitungsdauer der mit Wasser angemachten Brandschutzmasse möglich ist und andererseits das Bindemittel ausreichend schnell eine Eigenstabilisierung des Brandschutzschaums ermöglicht, bevor dieser nach dem Ausschäumen beginnt in sich zusammen zu fallen. Andererseits kann die Abbindegeschwindigkeit über diese Additive so eingestellt werden, dass die Eigenstabilität des Schaums nicht bereits zu einem Zeitpunkt erreicht wird, an dem die Schäumungskomponente noch nicht vollständig abreagiert ist. Der Abbindebeschleuniger kann in Mengen von 0,001 bis 1 Gew.-%, insbesondere 0,05 bis 0,25 Gew.-%, bezogen auf die Zusammensetzung, eingesetzt werden.

Weiterhin kann die erfindungsgemäße Zusammensetzung auch mindestens einen Entschäumer enthalten, beispielsweise eine feste Kombination von flüssigen Kohlenwasserstoffen, Polyglykolen und amorpher Kieselsäure. Ein solcher Entschäumer kann insbesondere in Mengen von 0,001 bis 1 Gew.-%, vorzugsweise 0,05 bis 3 Gew.-%, bezogen auf die Trockenmischung, eingesetzt werden. Durch den Einsatz von Entschäumern kann in Kombination mit den erfindungsgemäß eingesetzten Schaumstabilisatoren die Schaumstruktur und das Porenvolumen des Schaums beeinflusst werden.

Des weiteren kann die erfindungsgemäße Zusammensetzung außerdem mindestens ein Stabilisierungsmittel enthalten. Solche Stabilisierungsmittel können beispielsweise ausgewählt sein aus Gummen (z. B. Diutan Gum) oder aber auf Basis von Cellulose oder Cellulosederivaten (z. B. Hydroxyethylcellulose ausgebildet sein). Gleichermaßen können verschiedene Stabilisierungsmittel miteinander kombiniert werden, z. B. Gummen einerseits und Cellulose oder Cellulosederivate andererseits. Wenn als Stabilisierungsmittel Gummen eingesetzt werden, können diese in Mengen von 0,001 bis 0,2 Gew.-%, vorzugsweise 0,03 bis 0,08 Gew.-%, bezogen auf die Zusammensetzung eingesetzt werden. Wenn als Stabilisierungsmittel Cellulose bzw. Cellulosederivate (z. B. Hydroxyethylcellulose) eingesetzt werden, können diese in Mengen von 0,001 bis 0,5 Gew.-%, vorzugsweise 0,05 bis 0,15 Gew.-%, bezogen auf die Zusammensetzung, eingesetzt werden.

Für alle vorgenannten Mengenangaben gilt, dass es einzelfallbedingt oder anwendungstechnisch gegebenenfalls erforderlich sein kann, von diesen Mengenangaben abzuweichen. Dies zu entscheiden, liegt im Ermessen des Fachmanns.

Die erfindungsgemäße Zusammensetzung kann darüber hinaus auch Polymere wie Acrylate oder Polyurethane beispielsweise in Form einer wässrigen Dispersion enthalten.

Außerdem kann die erfindungsgemäße Zusammensetzung mindestens einen Zusatz zur Einstellung des Wasserrückhaltevermögens enthalten. Geeignet für diesen Zweck sind zum Beispiel Cellulosederivate, insbesondere Celluloseether.

Eine weitere bevorzugte Ausführungsform der erfindungsgemäßen Zusammensetzung zeichnet sich dadurch aus, dass die Zusammensetzung anorganische Füllstoffe enthält ausgewählt aus Aluminiumoxiden, Aluminiumhydroxiden, Aluminiumsilikaten, Bauxit, Borsäure, Borax, Calciumsilikaten, Feldspate, Kaoline, Magnesiumoxide, Magnesiumhydroxide, Mullit, Perlit, Schamotte, Glimmer, Siliziumcarbid, Tonen, Vermiculit, Zeolith, Glasschaum, Glashohlkugeln oder Flugasche. Dies ist besonders vorteilhaft, weil mit Hilfe dieser Füllstoffe die mechanischen Eigenschaften des Brandschutzschaums verbessert werden können. Insbesondere kann durch den Einsatz solcher Füllstoffe ein Schrumpfen des Brandschutzschaums bei starker thermischer Belastung verhindert werden. Dabei haben sich der Einsatz von Schamotte und/ oder Glimmerplättchen als besonders vorteilhaft in Bezug auf die Verhinderung des Schrumpfens im Brandfall erwiesen.

Besonders bevorzugte Füllstoffe sind Leichtfüllstoffe, da bei Einsatz dieser Füllstoffe das spezifische Gewicht der Brandschutzschäume reduziert werden kann, ohne dabei die mechanische Belastbarkeit zu reduzieren.

Zu den erfindungsgemäß geeigneten Leichtzuschlagstoffen gehören Leichtzuschlagstoffe auf Basis natürlicher Gesteinskörnungen, Leichtzuschlagstoffe auf Basis natürlicher Rohstoffe, Leichtzuschlagstoffe auf Basis von aus industriellen Nebenprodukten hergestellten Gesteinskörnungen und Leichtzuschlagstoffe auf Basis von industriellen Nebenprodukten.

Geeigneterweise kann der erfindungsgemäß eingesetzte Leichtfüllstoff beispielsweise aus mineralischen Leichtfüllstoffen ausgewählt sein. Die erfindungsgemäß einsetzbaren Leichtfüllstoffe besitzen eine Komrohdichte im Sinne der DIN 4226-2 (Februar 2002) unterhalb von 2000 kg/ m³, bevorzugt unterhalb von 1200 kg/ m², besonders bevorzugt unterhalb von 800 kg/ m³, ganz besonders bevorzugt unterhalb von 500 kg/m³ oder gar 300 kg/m³.

Nichtbeschränkende Beispiele für erfindungsgemäß geeignete Leichtzuschlagstoffe sind Glas-, Kunststoff- oder Keramikmikrohohlkugeln, Blähglas, Blähglimmer (Vermiculit), Blähperlit, Blähschiefer, Blähton, gesinterte Steinkohlenflugasche, Ziegelsplitt, Naturbims, Tuff, Lava (Lavaschlacke), Hüttenbims und Kesselsand.

Nach einer weiteren bevorzugten Ausführungsform der erfindungsgemäßen Zusammensetzung enthält diese Fasern und/ oder Gewebe oder Gelege aus Fasern, wobei die Fasern ausgewählt sind aus Glas-, Cellulose-, Polyethylen-, Polypropylen-, Polyamid-, Kohlefasern, Steinwolle oder Mineralwolle. Dies ist besonders vorteilhaft, weil durch den Einsatz derartiger Fasern die Gefahr der Rissbildung insbesondere bei thermischer Belastung im Brandfall erheblich reduziert werden kann. Außerdem erhöht sich durch den Einsatz solcher Materialien die Biegefestigkeit und das Elastizitätsmodul der ausgeschäumten Brandschutzmassen.

Gemäß einer weiteren Ausführungsform der erfindungsgemäßen Zusammensetzung ist der Schaumstabilisator ausgewählt aus Tensiden, Bentonit, Stärke sowie Stärkederivaten, Gelatinen, Cellulose sowie Cellulosederivaten oder Polymeren sowie Polymerdispersionen. Dies ist besonders vorteilhaft, da durch diese Schaumstabilisatoren die durch die Schäumungskomponente freigesetzten Gase in der Brandschutzmasse fein verteilte Gasblasen bilden und damit einen feinporigen Schaum liefern. Außerdem führen diese Substanzen dazu, dass der Schaum für so lange stabilisiert wird, bis das Bindemittel dem Schaum eine ausreichende Stabilität verleiht und so ein Zusammenfallen des Schaums verhindert.

Ein weiterer Gegenstand der vorliegenden Erfindung ist ein anorganischer Brandschutzschaum, der aus der erfindungsgemäßen hydraulisch abbindenden Zusammensetzung und Wasser herstellbar ist. Solche erfindungsgemäßen Schäume haben sehr gute Brandschutzeigenschaften bei gleichzeitig geringem spezifischen Gewicht. Die Wassermenge zur Herstellung des Brandschutzschaums liegt dabei beispielsweise im Verhältnis Feststoffanteil der erfindungsgemäßen Zusammensetzung : Wasser = 3 :1 bis 1 :1. Ein besonderer Vorteil des erfindungsgemäßen Brandschutzschaums ist, dass er direkt am Einsatzzweck hergestellt werden kann und daher als Ortschaum eingesetzt werden kann. Dadurch können beispielsweise Mauerdurchbrüche oder Türzargen auf einer Baustelle brandhemmend ausgestattet werden.

Gemäß einer bevorzugten Ausführungsform des erfindungsgemäßen Brandschutzschaums weist dieser im trocknen Zustand eine Dichte von 80 kg/m³ bis 1000 kg/m³, insbesondere 100 kg/m³ bis 850 kg/m³ auf. Der trockne Zustand eines erfindungsgemäßen Schaums ist dann erreicht, wenn dieser nach dem Abbinden und Verdunsten des Restwassers nahezu Gewichtskonstanz erreicht. Die Trocknung kann dabei bei Umgebungstemperatur oder bei erhöhter Temperatur, zum Beispiel bei ca. 40°C erfolgen. Ferner bevorzugt weist der Brandschutzschaum ein spezifisches Gewicht im trocknen Zustand unterhalb von 600 kg/ m³, weiter bevorzugt unterhalb von 500 kg/ m³, ganz besonders bevorzugt unterhalb von 400 kg/ m³, insbesondere unterhalb von 300 kg/ m³ auf. Dies ist besonders vorteilhaft, weil Brandschutzschäume mit einem solchen spezifischen Gewichten die Herstellung von einerseits sehr effektiven Brandschutzvorrichtungen erlauben, ohne jedoch deren Gewicht zu stark zu erhöhen. Dies ist insbesondere dann von Bedeutung, wenn die Brandschutzvorrichtung beweglich ist wie es beispielsweise bei einer Brandschutztür der Fall ist.

Ein besonderer Vorteil der erfindungsgemäßen Brandschutzschäume ist, dass diese im Brandfall keine giftigen oder brennbaren Gase freisetzen.

Ein weiterer Gegenstand der vorliegenden Erfindung ist eine Brandschutzvorrichtung enthaltend einen erfindungsgemäßen Brandschutzschaum.

Nach einer bevorzugten Ausführungsform der erfindungsgemäßen Brandschutzvorrichtung ist der in der Brandschutzvorrichtung enthaltene Brandschutzschaum als Formkörper oder als Füllung in einer Tür, einer Türzarge, einem Hohlprofil, einer Zwischenwand oder einer Deckenpaneele ausgestaltet. Dabei kann der Brandschutzschaum auch als Formkörper zum Verkleiden von Mauern ausgestaltet sein oder selbst in Form von vorgefertigten Mauerelementen vorliegen, die die Erstellung von selbsttragenden Brandschutzwänden ermöglicht. Der Formkörper kann dabei kaschiert oder aber auch unkaschiert zum Einsatz gebracht werden.

Ein weiterer Gegenstand der vorliegenden Erfindung ist ein Verfahren zur Herstellung einer Brandschutzvorrichtung, bei dem eine erfindungsgemäße Zusammensetzung mit einer geeigneten Menge an Wasser vermischt wird, anschließend in einen Hohlkörper mit einer oder mehreren Kavitäten gefüllt wird und die Zusammensetzung unter Ausbildung eines Brandschutzschaums aushärtet. Die geeignete Wassermenge kann der Fachmann mit einigen Handversuchen ermitteln und sie richtet sich in erster Linie nach der Menge und Typ des eingesetzten Bindemittels. Die Wassermenge liegt dabei beispielsweise im Verhältnis Feststoffanteil der erfindungsgemäßen Zusammensetzung : Wasser = 3 :1 bis 1 :1. Dieses Verfahren ist besonders vorteilhaft, weil der Brandschutzschaum erst nach Befüllen der Form oder des Hohlkörpers entsteht und so sämtliche Hohlräume durch die Schaumexpansion während des Abbindevorgangs selbstständig ausfüllt. Dadurch lassen sich Brandschutzeinrichtungen mit einem erfindungsgemäßen Brandschutzschaum herstellen, die nahezu vollständig mit dem Brandschutzschaum gefüllt sind, selbst wenn diese unregelmäßig geformt sind. Derartige Brandschutzeinrichtungen sind damit denen überlegen, die beispielsweise mit Brandschutzmatten ausgelegt werden, da letztere nicht ohne weiteres eine vollständige Füllung der Brandschutzeinrichtung sicherstellen können. Ein weiterer Vorteil ist, dass dieses erfindungsgemäße Verfahren auch auf einer Baustelle durchgeführt werden kann um Mauerdurchbrüche oder Türzargen brandhemmend auszustatten.

Die Herstellung der Schäume kann bei dem erfindungsgemäßen Verfahren kontinuierlich oder diskontinuierlich erfolgen. Im letzteren Fall wird die erfindungsgemäße Zusammensetzung mit einer geeigneten Anmachwassermenge versetzt, homogen vermischt und in die zu füllenden Hohlräume oder Formen vergossen. Die kontinuierliche Herstellung der Schäume kann beispielsweise in einer einfachen Putzmaschine, wie sie auf Baustellen zum Aufbringen von Putzsystemen zum Einsatz kommt, erfolgen.

Ein weiterer Gegenstand der vorliegenden Erfindung ist die Verwendung einer erfindungsgemäßen Zusammensetzung oder eines erfindungsgemäßen Brandschutzschaums zur Herstellung einer Brandschutzvorrichtung.

### Ausführungsbeispiele:

Die vorliegende Erfindung wird nun anhand von Beispielen näher erläutert. Die Mengen der einzelnen Komponenten sind in Gewichtsteilen angegeben. Die einzelnen Brandschutz-Schaumkörper werden anhand der unten aufgeführten Rezepturen derart hergestellt, dass die Einzelkomponenten der Zusammensetzungen homogen miteinander vermischt werden, danach in eine Form gegossen und nach dem Aushärten einem Trocknungsschritt zur Entfernung des Restwassers unterzogen werden. Dazu werden die Prüfkörper in der Regel bei 40°C an der Luft bis zur Gewichtskonstanz getrocknet. Anschließend werden sie einer Brandprüfung nach der Einheitstemperaturkurve (ETK) gemäß DIN 4102 Teil 2 zugeführt.

Dabei wird der Prüfkörper in der Prüfbrennkammer dem folgenden Zeit/ Temperaturprogramm unterzogen:

| Zeit/ min | Temperatur/ °C |
|---|---|
| 30 | 822 |
| 60 | 925 |
| 90 | 986 |
| 120 | 1029 |
| 180 | 1090 |

Das Abbruchkriterium ist erreicht, wenn auf der dem Feuer abgewandten Seite des Probenkörpers eine Temperaturerhöhung von mehr als 180 K bzw. °C gegenüber der Ausgangstemperatur registriert wird.

### Beispiel 1 (Vergleichsbeispiel):

| | |
|---|---|
| Zusammensetzung: | |
| α-Halbhydrat Gips | 50 Teile |
| Wasser | 30 Teile |
| Phosphorsäure | 1,2 Teile |
| Kreide | 2,6 Teile |
| Spülmittel (1% ige wässrige Lösung) | 0,03 Teile |

Diese Zusammensetzung liefert einen sehr feinporigen Schaum mit einer Nassdichte von 500 kg/m³. Die Dichte in getrocknetem Zustand liegt bei 370 kg/m³, die Dicke des Prüfkörpers beträgt 58 mm, Innerhalb von 200 Minuten Brandprüfung wird das Abbruchkriterium, Überschreiten der 180°C Temperaturdifferenz auf der Kaltseite, nicht erreicht.

### Beispiel 2:

| | |
|---|---|
| Zusammensetzung: | |
| Schnellzement Supracem SC-45 (Schretter & Cie) | 50 Teile |
| wässrige Bentonit-Lösung (1%ig) | 25 Teile |
| wässrige Methylethylcelluloselösung (0,8 %ig) | 5 Teile |
| Wasserstoffperoxid 35 %ige wässrige Lösung | 1,5 Teile |
| Braunstein | 0,4 Teile |

Die Fließfähigkeit des Schaums ist ausgezeichnet. Die vollständige Ausschäumung ist innerhalb von 13 Minuten abgeschlossen und erreicht nach 19 Minuten eine Maximaltemperatur von 48,1 °C. Es wird ein sehr harter Schaumkörper mit einer Nassdichte von 480 kg/m³ erhalten. Die Dichte vor Brand beträgt 355 kg/m³, die Schaumdicke 58 mm, die Brandwiderstandszeit > 200 Minuten.

### Beispiel 3 (Vergleichsbeispiel):

### Zusammensetzung:

| | |
|---|---|
| REA-Gips | 50 Teile |
| Schamotte | 10 Teile |
| Wollastonit (stengelförmig) | 10 Teile |
| Glimmer (plättchenförmig) | 10 Teile |
| wässrige Tyloselösung (0,8 %ig) | 62 Teile |
| Wasserstoffperoxid 35 %ige wässrige Lösung | 2 Teile |
| Braunstein | 0,4 Teile |

Innerhalb von 4,5 Minuten ist die maximale Schaumhöhe und innerhalb von 16 Minuten die Maximaltemperatur von 45°C erreicht.

Es wird ein Schaumkörper mit einer Nassdichte von 500 kg/m³ erhalten. Dieser Schaumkörper wird bei 40°C bis zur Gewichtskonstanz getrocknet. Die Dichte im getrockneten Zustand beträgt 320 kg/m³. Der Schaumkörper mit einer Dicke von 57 mm wird daraufhin einer Brandprüfung nach der Einheitstemperaturkurve unterzogen. Selbst nach einer Prüfungsdauer von 150 Minuten ist das Abbruchkriterium von 180 °C Temperaturdifferenz auf der Kaltseite noch nicht erreicht. Nach Durchführung der Brandprüfung ist der Schaumkörper vollkommen intakt. Es sind auf der Feuerseite keinerlei Risse und kein sichtbarer Brandschrumpf erkennbar.

### Beispiel 4 (Vergleichsbeispiel):

| | |
|---|---|
| Zusammensetzung: | |
| α-Halbhydrat Gips | 50 Teile |
| Mineralwolle (langfaserig) | 2 Teile |
| wässrige Tyloselösung (0,8 %ig) | 30 Teile |
| Wasserstoffperoxid 35 %ige wässrige Lösung | 1,05 Teile |
| Braunstein | 0,1 Teile |

Innerhalb von 6,5 Minuten ist die maximale Schaumhöhe erreicht. Es wird ein Schaumkörper mit einer Nassdichte von 450 kg/m³ erhalten. Dieser Schaumkörper wird bei 40°C bis zur Gewichtskonstanz getrocknet. Die Dichte im getrockneten Zustand beträgt 340 kg/m³. Ein 58 mm dicker Schaumkörper wird daraufhin einer Brandprüfung nach der Einheitstemperaturkurve unterzogen. Selbst nach einer Prüfungsdauer von 200 Minuten ist das Abbruchkriterium von 180 °C Temperaturdifferenz auf der Kaltseite noch nicht erreicht. Durch den Einsatz der Mineralwolle zeigt der Schaumkörper nach Beispiel 4 eine Biegefähigkeit von 0,66 MPa bestimmt nach EN 12467 und ein Elastizitätsmodul von 171 MPa bestimmt nach EN 12467. Der Schaumkörper ohne Mineralwolle weist im Vergleich dazu eine Biegefestigkeit von nur 0,41 MPa und ein Elastizitätsmodul von 99 MPa auf.

### Beispiel 5:

| | |
|---|---|
| Zusammensetzung: | |
| Schnellzement | 50 Teile |
| Wollastonit | 7 Teile |
| Quellstärke | 0,05 Teile |
| Mineralwolle | 2 Teile |
| Wasser | 32 Teile |
| Wasserstoffperoxid 35 %ige wässrige Lösung | 3,4 Teile |
| Braunstein | 1 Teil |

Innerhalb von 12 Minuten ist die maximale Schaumhöhe und innerhalb von 14 Minuten die Maximaltemperatur von 49,5°C erreicht.

Es wird ein Schaumkörper mit einer Nassdichte von 250 kg/m³ erhalten. Dieser Schaumkörper wird bei 40°C bis zur Gewichtskonstanz getrocknet. Die Dichte im getrockneten Zustand beträgt 177 kg/m³. Eine Schaumplatte mit einer Dicke von 59 mm wird daraufhin einer Brandprüfung nach der Einheitstemperaturkurve unterzogen. Selbst nach einer Prüfungsdauer von 210 Minuten ist das Abbruchkriterium von 180 °C Temperaturdifferenz auf der Kaltseite noch nicht erreicht. Nach Durchführung der Brandprüfung ist der Schaumkörper vollkommen intakt. Es sind auf der Feuerseite keinerlei Risse und kein sichtbarer Brandschrumpf erkennbar.

### Beispiel 6:

| | |
|---|---|
| Zusammensetzung: | |
| Schnellzement | 50 Teile |
| Wollastonit | 7 Teile |
| Pulvergelatine | 0,05 Teile |
| Mineralwolle | 2 Teile |
| Wasser | 30 Teile |
| Wasserstoffperoxid 35 %ige wässrige Lösung | 2,2 Teile |
| Braunstein | 0,65 Teil |

Innerhalb von 9 Minuten ist die maximale Schaumhöhe und innerhalb von 20 Minuten die Maximaltemperatur erreicht.

Es wird ein Schaumkörper mit einer Nassdichte von 350 kg/m³ erhalten. Dieser Schaumkörper wird bei 40°C bis zur Gewichtskonstanz getrocknet. Die Dichte im getrockneten Zustand beträgt 280 kg/m³. Eine Schaumplatte mit einer Dicke von 45 mm wird daraufhin einer Brandprüfung nach der Einheitstemperaturkurve unterzogen. Selbst nach einer Prüfungsdauer von 210 Minuten ist das Abbruchkriterium von 180 °C Temperaturdifferenz auf der Kaltseite noch nicht erreicht. Nach Durchführung der Brandprüfung ist der Schaumkörper vollkommen intakt. Es sind auf der Feuerseite keinerlei Risse und kein sichtbarer Brandschrumpf erkennbar.

## Patentansprüche

1. Verwendung einer hydraulisch abbindenden Zusammensetzung zur Herstellung von anorganischen Brandschutzschäumen, wobei die Zusammensetzung bezogen auf die Trockenmischung 30 bis 95 Gew.-% wenigstens eines hydraulischen Bindemittels, eine Schäumungskomponente sowie einen Schaumstabilisator aufweist, **dadurch gekennzeichnet, dass** das hydraulische Bindemittel ein pH-neutrales oder alkalisches Bindemittel ist, welches Schnellzement enthält und dass als Schäumungskomponente Wasserstoffperoxid und Braunstein eingesetzt werden.

2. Verwendung nach Anspruch 1, **dadurch gekennzeichnet, dass** das hydraulische Bindemittel ferner Zement, insbesondere Portlandzement, Trass, Puzzolane, hydraulische Kalke und Gips oder aus Mischungen von diesen enthält.

3. Verwendung nach einem der Ansprüche 1 oder 2, **dadurch gekennzeichnet, dass** die Schäumungskomponente Sauerstoff freisetzt.

4. Verwendung nach einem der vorstehenden Ansprüche, **dadurch gekennzeichnet, dass** die Zusammensetzung anorganische Füllstoffe enthält ausgewählt aus Aluminiumoxiden, Aluminiumhydroxiden, Aluminiumsilikaten, Bauxit, Borsäure, Borax, Calciumsilikaten, Feldspate, Kaoline, Lithiumsalze, Magnesiumoxid, Magnesiumhydroxid, Mullit, Perlit, Schamotte, Glimmer, Siliziumcarbid, Tonen, Vermiculit, Zeolith, Glasschaum, Glashohlkugeln oder Flugasche.

5. Verwendung nach einem der vorstehenden Ansprüche, **dadurch gekennzeichnet, dass** die Zusammensetzung Fasern und/ oder Gewebe oder Gelege aus Fasern enthält, wobei die Fasern ausgewählt sind aus Glas-, Cellulose-, Polyethylen-, Polypropylen-, Polyamid-, Kohlefasern, Steinwolle oder Mineralwolle.

6. Verwendung nach einem der vorstehenden Ansprüche, **dadurch gekennzeichnet, dass** die Zusammensetzung Abbindeverzögerer und/ oder Abbindebeschleuniger enthält.

7. Verwendung nach einem der vorstehenden Ansprüche, **dadurch gekennzeichnet, dass** der Schaumstabilisator ausgewählt ist aus Tensiden, Bentonit, Stärke sowie Stärkederivaten, Gelatinen, Cellulose sowie Cellulosederivaten oder Polymeren sowie Polymerdispersionen.

8. Anorganischer Brandschutzschaum, herstellbar aus
a) einer hydraulisch abbindenden Zusammensetzung, die bezogen auf ihre Trockenmischung 30 bis 95 Gew.-% wenigstens eines hydraulischen Bindemittels, eine Schäumungskomponente sowie einen Schaumstabilisator aufweist und das hydraulische Bindemittel ein pH-neutrales oder alkalisches Bindemittel ist, welches Schnellzement enthält, wobei als Schäumungskomponente Wasserstoffperoxid und Braunstein eingesetzt werden und
b) Wasser.

9. Anorganischer Brandschutzschaum nach Anspruch 8, **dadurch gekennzeichnet, dass** der Brandschutzschaum ausgehärtet und als Formkörper oder als Füllung in einer Tür, einer Türzarge, einem Hohlprofil, einer Zwischenwand oder einer Deckenpaneele ausgestaltet ist.

10. Verfahren zur Herstellung einer Brandschutzvorrichtung, bei dem eine Zusammensetzung mit einer geeigneten Menge an Wasser vermischt wird, anschließend in einen Hohlkörper mit einer oder mehreren Kavitäten gefüllt wird und die Zusammensetzung unter Ausbildung eines Brandschutzschaums aushärtet, wobei die Zusammensetzung bezogen auf
ihre Trockenmischung 30 bis 95 Gew.-% wenigstens eines hydraulischen Bindemittels, eine Schäumungskomponente sowie einen Schaumstabilisator aufweist, wobei das hydraulische Bindemittel ein pHneutrales oder alkalisches Bindemittel ist, welches Schnellzement enthält und wobei als Schäumungskomponente Wasserstoffperoxid und Braunstein eingesetzt werden.

## Claims

1. A use of a hydraulically setting composition for producing inorganic fire protection foams, wherein the composition comprises, with respect to the dried mixture, 30 to 95 % by mass of at least one hydraulic binder, a foaming component as well as a foam stabilizer, **characterized in that** the hydraulic binder is a pH neutral or alkaline binder which contains rapid setting cement, and that hydrogen peroxide and manganese dioxide are used as foaming component.

2. A use according to claim 1, **characterized in that** the hydraulic binder furthermore contains cement, in particular Portland cement, trass, pozzolans, hydraulic limes and gypsum or mixtures of these ones.

3. A use according to one of the claims 1 or 2, **characterized in that** the foaming component releases oxygen.

4. A use according to one of the preceding claims, **characterized in that** the composition contains inorganic fillers which are selected from aluminum oxides, aluminum hydroxides, aluminum silicates, bauxite, boric acid, borax, calcium silicates, feldspars, kaolines, lithium salts, magnesium oxide, magnesium hydroxide, mullite, perlite, fireclay, mica, silicon carbide, clays, vermiculite, zeolite, glass foam, hollow glass spheres or fly ash.

5. A use according to one of the preceding claims, **characterized in that** the composition contains fibers and/or woven or non-woven fabrics made of fibers, wherein the fibers are selected from glass, cellulose, polyethylene, polypropylene, polyamide, carbon fibers, rock wool or mineral wool.

6. A use according to one of the preceding claims, **characterized in that** the composition contains set retarders and/or set accelerators.

7. A use according to one of the preceding claims, **characterized in that** the foam stabilizer is selected from tensides, bentonite, starch as well as starch
derivates, gelatins, cellulose as well as cellulose derivates or polymers as well as polymer dispersions.

8. An inorganic fire protection foam that can be produced from:
a) a hydraulically setting composition which comprises, with respect to the dried mixture, 30 to 95 % by mass of at least one hydraulic binder, a foaming component as well as a foam stabilizer, wherein the hydraulic binder is a pH neutral or alkaline binder which contains rapid setting cement, wherein hydrogen peroxide and manganese dioxide are used as foaming component and
b) water.

9. An inorganic fire protection foam according to claim 8, **characterized in that** the fire protection foam is cured and designed as molded body or as filling in a door, a door frame, a hollow profile, a partition wall or a ceiling panel.

10. A method for manufacturing a fire protection device, in which a composition is mixed with an appropriate quantity of water, is subsequently filled into a hollow body having one or more cavities and the composition cures while forming a fire protection foam, wherein the composition comprises, with respect to the dried mixture, 30 to 95 % by mass of at least one hydraulic binder, a foaming component as well as a foam stabilizer, wherein the hydraulic binder is a pH neutral or alkaline binder which contains rapid setting cement, and wherein hydrogen peroxide and manganese dioxide are used as foaming component.

## Revendications

1. Utilisation d'une composition à prise hydraulique pour fabriquer des mousses coupe-feu inorganiques, la composition comprenant, par rapport au mélange sec, 30 à 95 % en poids d'au moins un liant hydraulique, un composant de moussage ainsi qu'un stabilisant de mousse, **caractérisée en ce que** le liant hydraulique est un liant de pH neutre ou alcalin qui contient du ciment rapide et qu'on utilise du peroxyde d'hydrogène et du bioxyde de manganèse en tant que composant de moussage.

2. Utilisation selon la revendication 1, **caractérisée en ce que** le liant hydraulique comprend en outre du ciment, notamment du ciment de Portland, du trass, du pouzzolane, des chaux hydrauliques et du plâtre ou des mélanges de ceux-ci.

3. Utilisation selon l'une des revendications 1 ou 2, **caractérisée en ce que** le composant de moussage dégage de l'oxygène.

4. Utilisation selon l'une des revendication précédentes, **caractérisée en ce que** la composition contient des charges inorganiques qui sont sélectionnés parmi des oxydes d'aluminium, des hydroxydes d'aluminium, des silicates d'aluminium, de la bauxite, de l'acide borique, du borax, des silicates de calcium, des feldspaths, des kaolins, des sels de lithium, de l'oxyde de magnésium, de la mullite, de la perlite, des chamottes, du mica, de la carbure de silicium, des glaises, de la vermiculite, de la zéolithe, de la mousse de verre, des billes creuses de verre ou des cendres volantes.

5. Utilisation selon l'une des revendications précédentes, **caractérisée en ce que** la composition contient des fibres et/ou des tissus ou des canevas légers en fibres, les fibres étant sélectionnés parmi des fibres de verre, de cellulose, de polyéthylène, de polypropylène, de polyamide, de carbone, de la laine de roche ou de de la laine minérale.

6. Utilisation selon l'une des revendications précédentes, **caractérisée en ce que** la composition contient des retardeurs de prise et/ou des accélérateurs de prise.

7. Utilisation selon l'une des revendications précédentes, **caractérisée en ce que** le stabilisant de mousse est sélectionné parmi des agents tensioactifs, de la bentonite, de l'amidon ainsi que des dérivés de l'amidon, des gélatines, de la cellulose ainsi que des dérivés de cellulose ou des polymères ainsi que des dispersions polymère.

8. Musse coupe-feu inorganique pouvant être produite à partir de :
a) une composition à prise hydraulique qui comprend, par rapport au mélange sec, 30 à 95 % en poids d'au moins un liant hydraulique, un composant de moussage ainsi qu'un stabilisant de mousse, le liant hydraulique étant un liant de pH neutre ou alcalin qui contient du ciment rapide, du peroxyde d'hydrogène et du bioxyde de manganèse étant utilisés en tant que composant de moussage et
b) de l'eau.

9. Mousse coupe-feu inorganique selon la revendication 8, **caractérisée en ce que** la mousse coupe-feu est durcie et configurée en forme d'un corps moulé ou d'un remplissage dans une porte, une huisserie, un profil creux, un cloison ou un panneau de plafond.

10. Procédé de fabrication d'un dispositif de protection contre le feu, dans lequel on mélange une composition avec une quantité d'eau appropriée, on la verse ensuite dans un corps creux ayant une ou plusieurs cavités et la composition durcit en formant une mousse coupe-feu, la composition comprenant, par rapport au mélange sec, 30 à 95 % en poids d'au moins un liant hydraulique, un composant de moussage ainsi qu'un stabilisant de mousse, le liant hydraulique étant un liant de pH neutre ou alcalin qui contient du ciment rapide, et du peroxyde d'hydrogène et du bioxyde de manganèse étant utilisés en tant que composant de moussage.
